# EUROPÄISCHE PATENTSCHRIFT

(11) **EP 4 151 528 B1**
(45) Veröffentlichungstag und Bekanntmachung des Hinweises auf die Patenterteilung: **29.01.2025**
(21) Anmeldenummer: 22196945.4
(22) Anmeldetag: 21.09.2022
(51) Int. Cl.: B64D 11/06

(54) **FLUGZEUGSITZVORRICHTUNG**
AIRCRAFT SEAT DEVICE
DISPOSITIF DE SIÈGE D'AVION

(30) Priorität: 21.09.2021 DE 102021124418
(43) Veröffentlichungstag der Anmeldung: 22.03.2023
(73) Patentinhaber: Recaro Aircraft Seating GmbH & Co. KG, 74523 Schwäbisch Hall (DE)
(72) Erfinder: Wieland, Klaus, 74523 Bibersfeld (DE)
(74) Vertreter: Daub, Thomas

(56) Entgegenhaltungen:
- EP-A1- 0 336 852
- EP-A2- 1 598 270
- DE-A1- 102009 011 387

## Beschreibung

### Stand der Technik

Die Erfindung betrifft eine Flugzeugsitzvorrichtung nach dem Oberbegriff des Patentanspruchs 1.

Die Druckschrift DE 10 2009 011 387 A1 offenbart eine Flugzeugsitzvorrichtung mit einer Aufständereinheit, mit einer zu der Aufständereinheit verschwenkbaren Rückenlehne und mit einem Verstellmechanismus, der eine Federvorrichtung aufweist, die dazu vorgesehen ist, eine Rückstellkraft für die Rückenlehne bereitzustellen.

Die Druckschrift EP 0 336 852 A1 offenbart eine Flugzeugsitzvorrichtung mit einer Aufständereinheit, mit einer zu der Aufständereinheit verschwenkbaren Rückenlehne und mit einem Verstellmechanismus, der eine Federvorrichtung aufweist, die dazu vorgesehen ist, eine Rückstellkraft für die Rückenlehne bereitzustellen.

Die Aufgabe der Erfindung besteht insbesondere darin, eine gattungsgemäße Vorrichtung mit verbesserten Eigenschaften hinsichtlich des Komforts bereitzustellen. Die Aufgabe wird erfindungsgemäß durch die Merkmale der Patentansprüchen 1 und 9 gelöst, während vorteilhafte Ausgestaltungen und Weiterbildungen der Erfindung den Neben- und Unteransprüchen entnommen werden können.

### Vorteile der Erfindung

Die Erfindung geht aus von einer Flugzeugsitzvorrichtung mit einer Aufständereinheit, mit einer zu der Aufständereinheit verschwenkbaren Rückenlehne und mit einem Verstellmechanismus, der eine Federvorrichtung aufweist, die dazu vorgesehen ist, eine Rückstellkraft für die Rückenlehne bereitzustellen.

Es wird vorgeschlagen, dass die Federvorrichtung dazu vorgesehen ist, einen Kraftverlauf bereitzustellen, der mit zunehmendem Federweg eine zunehmende Steigung aufweist. Die Federvorrichtung kann hierfür eine progressive Federkennlinie aufweisen, deren Steigung sich über den Federweg erhöht und/oder eine kombinierte Federkennlinie, die in einem ersten Bereich eine erste Steigung und in einem zweiten Bereich eine zweite Steigung aufweist, die größer ist als die erste Steigung im ersten Bereich, wobei der zweite Bereich entlang eines Federwegs mit zunehmender Federkraft nach dem ersten Bereich angeordnet ist und sich vorzugsweise direkt an den ersten Bereich anschließt. Unter "vorgesehen" soll dabei besonders konstruktiv ausgestaltet und ausgelegt verstanden werden. Damit kann eine besonders komfortable Auslenkung der Rückenlehne ausgehend von einer Upright-Stellung, insbesondere einer TTL-Stellung (TTL: Taxiing, Takeoff and Landing), mit einem möglichst geringen Krafteinsatz durch einen Passagier, insbesondere auch durch eine 5-Percentil-Frau, in eine Reclinestellung der Rückenlehne erreicht und dennoch sichergestellt werden, dass die Federvorrichtung die Rückenlehne ausgehend von einem maximalen Recline der Rückenlehne ohne Krafteinwirkung, insbesondere ohne händische Krafteinwirkung an der Rückenlehne durch einen Passagier mit der Rückstellkraft der Federvorrichtung zurückstellt. Dabei soll unter einem "Recline" eine Auslenkung der Rückenlehne ausgehend von einer TTL-Stellung in Richtung einer Liegeposition verstanden werden sowie unter einer "Reclinestellung" eine Stellung der Rückenlehne, bei der die Rückenlehne einen Recline größer als Null aufweist. Grundsätzlich ist denkbar, dass die Federvorrichtung zumindest ein progressives Federelement aufweist. Zusätzlich oder alternativ weist die Federvorrichtung jedoch eine Federeinheit mit einem Federelement auf, das erst ab einem Recline größer als Null und insbesondere größer als 3°, d.h. einem Schwenkwinkel der Rückenlehne ausgehend von einer TTL-Stellung in Richtung einer Liegestellung größer als 3° und vorzugsweise größer als 5° in Wirkverbindung kommt. Unter "in Wirkverbindung kommen" soll in diesem Zusammenhang verstanden werden, dass erst ab der Wirkverbindung eine Bewegung der Rückenlehne eine Auswirkung auf eine Spannung des Federelements hat und sich insbesondere bei einer Auslenkung der Rückenlehne in Richtung der Liegestellung weiter erhöht. Unter "größer als Null" soll dabei eine nicht unwesentliche Auslenkung der Rückenlehne ausgehend von der TTL-Stellung verstanden werden und insbesondere eine Auslenkung, bei der bereits zumindest ein anderes Federelement der Federvorrichtung, wie beispielsweise eine Gasdruckfeder, bereits eine Auslenkung erfahren hat. Anstatt den Recline über einen Schwenkwinkel zu erfassen, ist auch üblich, den Recline über eine Auslenkungsstrecke eines obersten Teils der Rückenlehne zu erfassen. Dabei kommt vorteilhaft das Federelement erst ab einem Recline größer als 3 cm, vorzugsweise größer als 5 cm und besonders bevorzugt größer als 7,5 cm der Rückenlehne in Wirkverbindung. Die Flugzeugsitzvorrichtung weist vorzugsweise einen maximalen Recline größer als 15 cm und besonders vorteilhaft größer als 18 cm auf. Durch eine entsprechende Ausgestaltung kann einfach ein besonders vorteilhafter Kraftverlauf und insbesondere ein vorteilhafter Momentenverlauf an der Rückenlehne erreicht werden.

Ferner wird vorgeschlagen, dass das Federelement, das erst ab einem Recline größer als Null und insbesondere größer als 3° in Wirkverbindung kommt, bei einer Auslenkung von 4 mm eine Federkraft größer als 20N und besonders vorteilhaft größer als 50N erzeugt, wodurch eine vorteilhaft sichere Rückstellung und insbesondere vorteilhafte Kombination mit einer zusätzlichen Gasdruckfeder erreicht werden kann. Unter einer "Auslenkung des Federelements" soll in diesem Zusammenhang ein Federweg des Federelements verstanden werden, beispielsweise eine Stecke, um die sich eine Druckfeder bei einer Belastungszunahme verkürzt oder sich eine Zugfeder bei einer Belastungszunahme verlängert hat.

Zudem wird vorgeschlagen, dass die Federvorrichtung zusätzlich zu der einen Federeinheit zumindest eine weitere Federeinheit aufweist, die insbesondere eine Gasdruckfeder umfasst. Durch eine entsprechende Ausgestaltung kann konstruktiv einfach ein besonders vorteilhafter Kraftverlauf erreicht und insbesondere vorteilhaft eine Verriegelung in die Federvorrichtung integriert werden. Die Gasdruckfeder ist dabei vorzugsweise manuell verstellbar ausgebildet.

In einer weiteren Ausgestaltung der Erfindung wird vorgeschlagen, dass die Federvorrichtung eine Federeinheit mit einem ersten Federelement und zumindest einem, zum ersten in Reihe geschalteten zweiten Federelement aufweist. Das erste Federelement kommt dabei bei einer Schwenkbewegung der Rückenlehne ausgehend von der TTL-Stellung in Richtung der Liegestellung vor dem zweiten Federelement in Wirkverbindung. Vorzugsweise ist das zweite Federelement um ein Vielfaches stärker als das erste Federelement. Durch eine entsprechende Ausgestaltung kann eine platzsparende Konstruktion und in sich autark funktionierende Federeinheit erreicht werden. Anstatt einem ersten Federelement könnte auch ein Reibelement, wie insbesondere ein Reiblager vorgesehen sein.

Ferner wird vorgeschlagen, dass die Rückenlehne ein Gewicht größer als 10 kg und besonders vorteilhaft größer als 12 kg aufweist. Mit einer entsprechenden Rückenlehne kann in Zusammenwirkung mit der Federvorrichtung insgesamt ein besonders hoher Komfort erreicht werden.

Die Rückenlehne ist vorzugsweise rein mechanisch, d.h. nicht über einen elektrischen Aktor angetrieben, einstellbar ausgeführt. Ferner sind vorzugsweise die Rückenlehne und der Sitzboden gekoppelt und gemeinsam einstellbar ausgebildet.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: Eine schematische Darstellung eines Flugzeugsitzes in einer Seitenansicht,
- Fig. 2: einen Ausschnitt der schematischen Darstellung des Flugzeugsitzes von vorne,
- Fig. 3: eine Federeinheit einer Federvorrichtung des Flugzeugsitzes aus Fig. 1 und 2 in einer Seitendarstellung,
- Fig. 4: die Federvorrichtung aus Fig. 3 in einem Längsschnitt in einem unausgelenkten Zustand,
- Fig. 5: die Federvorrichtung aus Fig. 3 im Längsschnitt in einem teilweise ausgelenkten Zustand und
- Fig. 6: eine Federkennlinie der Federeinheit aus Fig. 3 und 4.

### Beschreibung des Ausführungsbeispiels

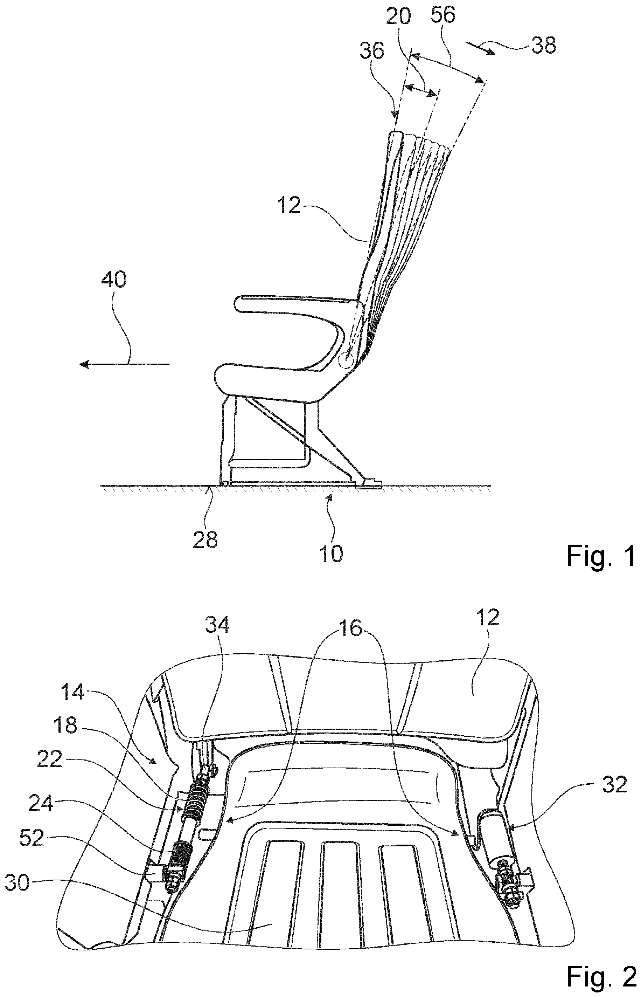

Figur 1 zeigt eine schematische Darstellung einer erfindungsgemäßen Flugzeugsitzvorrichtung, und zwar einen Flugzeugsitzes. Der Flugzeugsitz weist eine Aufständereinheit 10 auf, die im montierten Zustand an einem Flugzeugboden 28 eines nicht näher dargestellten Flugzeugs montiert ist. Ferner weist der Flugzeugsitz einen Sitzboden 30 und eine zu der Aufständereinheit 10 verschwenkbare Rückenlehne 12 auf (Fig. 1 und 2). Bei dem Flugzeugsitz handelt es sich um einen sogenannten Premium Economy Sitz, der gegenüber einem reinen Economy Sitz einen höheren Komfort bietet. Die Rückenlehne 12 des Flugzeugsitzes weist dabei ein Gewicht größer als 10 kg, insbesondere größer als 12 kg auf. Zudem weist der Flugzeugsitz einen Verstellmechanismus 14 auf, der eine Federvorrichtung 16 umfasst, die dazu vorgesehen ist, eine Rückstellkraft für die Rückenlehne 12 bereitzustellen.

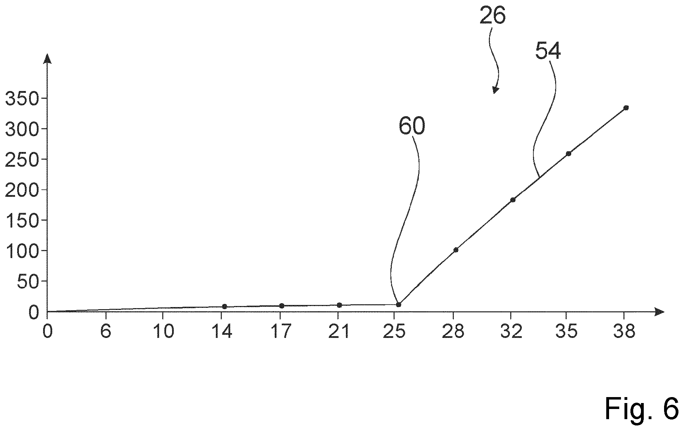

Die Federvorrichtung 16 ist dazu vorgesehen, einen Kraftverlauf 26 bereitzustellen, der mit zunehmendem Federweg eine zunehmende Steigung aufweist, wie dies in Figur 6 anhand einer Federkennlinie 54 einer Federeinheit 22 der Federvorrichtung 16 zu erkennen ist (Fig. 6). Die Federkennlinie 54 weist in einem ersten Bereich eine erste Steigung und in einem zweiten Bereich eine zweite Steigung auf, die größer ist als die erste Steigung, und zwar um ein Vielfaches. Zwischen den Steigungen weist die Federkennlinie 54 einen Knick 60 auf.

Die Federvorrichtung 16 umfasst zwei Federeinheiten 22, 32, und zwar eine zu der Federeinheit 22 weitere Federeinheit 32 mit einer manuell einstellbaren Gasdruckfeder, die zusätzlich als Verriegelungseinheit ausgebildet ist, und die Federeinheit 22 mit einem ersten Federelement 24 und einem, zum ersten in Reihe geschalteten zweiten Federelement 18 (Fig. 2, 3 und 4). Beide Federelemente 18, 24 sind als Schraubendruckfedern ausgebildet. Ein nicht näher dargestellter Gesamtkraftverlauf der Federvorrichtung 16 ergibt sich durch die Summe des Kraftverlaufs 26 und einem linearen Kraftverlauf der weiteren Federeinheit 32 der Federvorrichtung 16.

Die zwei Federeinheiten 22, 32 der Federvorrichtung 16 sind auf unterschiedlichen Seiten des Sitzbodens 30 des Flugzeugsitzes angeordnet (Fig. 2). Beide Federeinheiten 22, 32 der Federvorrichtung 16 sind in der Weise dimensioniert, dass diese in Alleinstellung bei einem maximalen Recline 56 der Rückenlehne 12 eine Rückstellkraft erzeugen, die kleiner ist als eine erforderliche Rückstellkraft, die erforderlich ist, um die Rückenlehne 12 ohne weitere Krafteinwirkung in Richtung ihrer TTL-Stellung 36 zu bewegen.

Das zweite Federelement 18 der Federeinheit 22 kommt erst bei einem Recline 20 der Rückenlehne 12 größer als 5°, und zwar bei einem Recline von ca. 6° in Wirkverbindung. Grundsätzlich sind auch andere, dem Fachmann als sinnvoll erscheinende Recline denkbar, bei denen das zweite Federelement 18 in Wirkverbindung kommt.

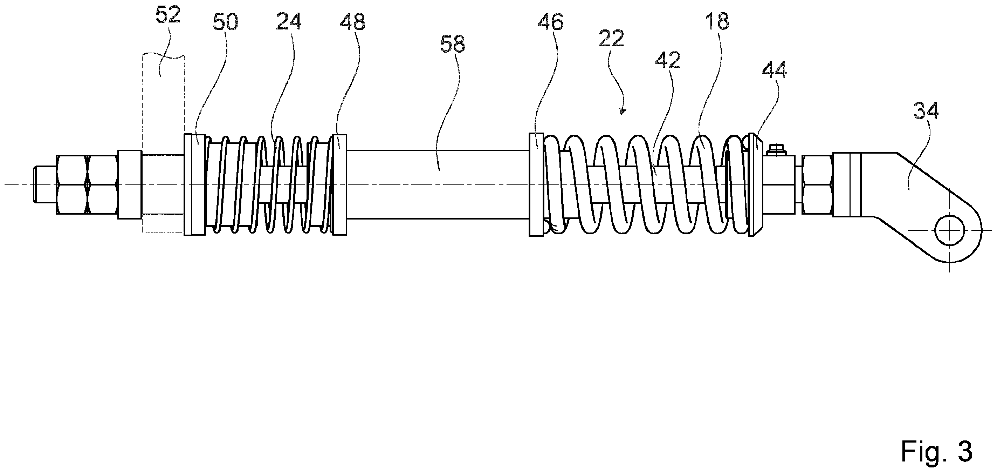

Die Federeinheit 22 ist mit einem Anlenkteil 34 mit einem unteren Ende der Rückenlehne 12 verbunden, das sich bei einem Verschwenken der Rückenlehne 12 ausgehend von der TTL-Stellung 36 in Richtung 38 einer Liegestellung in Sitzrichtung 40 bewegt (Fig. 1 und 3bis 5). Das Anlenkteil 34 ist mit einer Stange 42 verbunden, und zwar ist das Anlenkteil 34 auf die Stange 42 aufgeschraubt. Auf der Stange 42 sind Federteller 44 - 50 der Federelemente 18, 24 gelagert, zwischen denen die Federelemente 18, 24 angeordnet sind und sich an diesen abstützen (Fig. 3, 4 und 5). Auf einer dem Anlenkteil 34 abgewandten Seite der Stange 42 greift ein Abstützelement 52 an und ist mit dem verschiebbar auf der Stange 42 gelagerten Federteller 50 des ersten Federelements 24 fest gekoppelt.

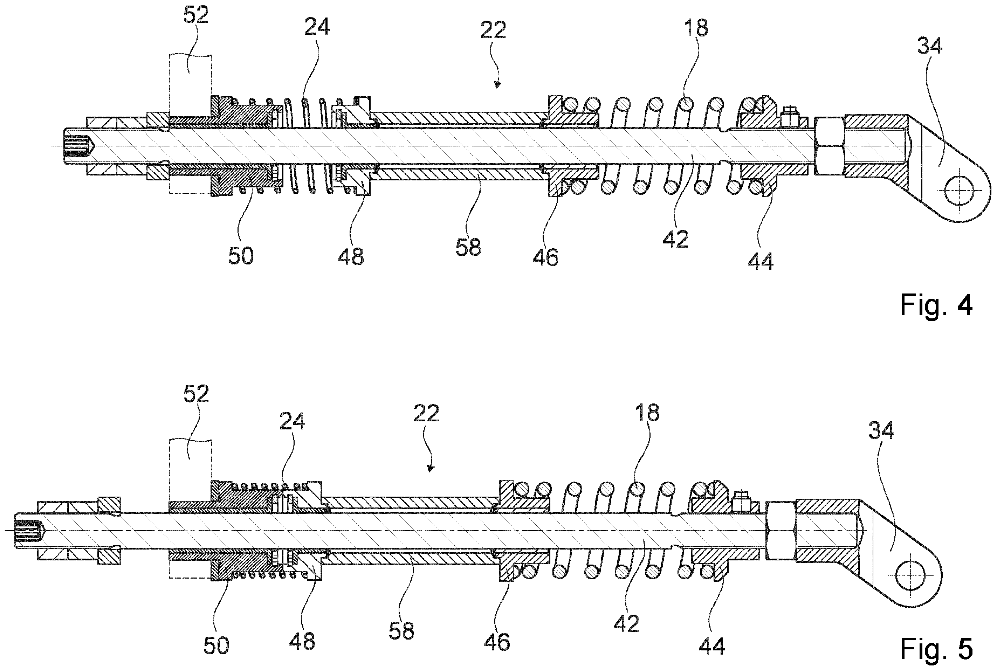

Wird die Rückenlehne 12 ausgehend von der TTL-Stellung 36 in Richtung 38 der Liegestellung verschwenkt, bewegt sich das Anlenkteil 34 gemeinsam mit der Stange 42 in Sitzrichtung 40, wobei die Stange 42 durch den mittels des Abstützelements 52 fixierten Federteller 50 des ersten Federelements 24 geschoben wird (Fig. 1 und 5). Dabei wird das erste Federelement 24 zusammengedrückt und weiter gespannt und der zweite Federteller 48 des ersten Federelements 24 bewegt sich gemeinsam mit der Stange 42 soweit in Richtung des ersten Federtellers 50 des ersten Federelements 24, bis diese in Anlage kommen, was bei einem Recline 20 von 6° der Fall ist. In dieser Stellung der Rückenlehne 12 weist die Federkennlinie 54 der Federeinheit 22 den Knick 60 zwischen den zwei unterschiedlichen Steigungen auf (Fig. 6).

Wird die Rückenlehne 12 ausgehend von dieser Reclinestellung beim Recline 20 weiter in Richtung 38 der Liegestellung geschwenkt, wird die Stange 42 durch den ersten Federteller 46 des zweiten Federelements 18 hindurch geschoben, der verschiebbar auf der Stange 42 gelagert ist. Dabei wird das zweite Federelement 18 zusammengedrückt und weiter gespannt und der zweite Federteller 44 des zweiten Federelements 18 bewegt sich gemeinsam mit der Stange 42 in Richtung des ersten Federtellers 46 des zweiten Federelements 18. Die sich zugewandten Federteller 46, 48 der Federelemente 18, 24 bzw. die Federteller 46, 48, die zwischen den Federelementen 18, 24 angeordnet sind, sind über eine Hülse 58 gekoppelt. Grundsätzlich wäre auch denkbar, dass die Federteller 46, 48, die zwischen den Federelementen 18, 24 angeordnet sind, von einem gemeinsamen Bauteil gebildet sind, wodurch eine Bauteilezahl reduziert werden könnte.

Der dem Anlenkteil 34 zugewandte Federteller 44 des zweiten Federelements 18 ist in seiner Position auf der Stange 42 einstellbar gelagert, und kann dazu genutzt werden, eine Vorspannkraft des zweiten Federelements 18 einzustellen. Der dem Anlenkteil 34 zugewandte Federteller 44 des zweiten Federelements 18 ist hierfür auf die Stange 42 aufgeschraubt. Um eine Vorspannung des zweiten Federelements 18 zu ermöglichen, ohne dass dabei das erste Federelement 24 zusammengedrückt wird, ist der Federteller 46 des zweiten Federelements 18 über einen nicht näher dargestellten Anschlag in seiner Bewegung in Richtung des ersten Federelements 24 begrenzt. Alternativ könnte auch der dem zweiten Federelement 18 zugewandte Federteller 48 des ersten Federelements 24 in seiner Bewegung auf der Stange 42 in Richtung des zweiten Federtellers 50 des ersten Federelements 24 begrenzt sein. Ferner wäre auch denkbar, dass auf Anschläge verzichtet wird und durch eine Spannkraft des ersten Federelements 24 die Federteller 46, 48 zwischen den Federelementen 18, 24 in Ausgangsstellungen gehalten werden. Ferner wäre auch denkbar, anstatt dem ersten Federelement 24 den Federteller 50 als Verschiebeelement mit einem Reiblager auszuführen, das auf der Stange 42 mit einer definierten Reibkraft verschiebbar ist.

Das zweite Federelement 18 erzeugt bei einer Auslenkung von 4 mm eine Federkraft von ca. 100 N (Fig. 6).

Wird die Rückenlehne 12 ausgehend von einem maximalen Recline 56 zurück in Richtung TTL-Stellung 36 bewegt, wird zuerst das zweite Federelement 18 entspannt und erzeugt eine erste Rückstellkraft und anschließend das erste Federelement 24 entspannt und erzeugt eine zweite, nahezu zu vernachlässigende Rückstellkraft.

### Bezugszeichen

- 10: Aufständereinheit
- 12: Rückenlehne
- 14: Verstellmechanismus
- 16: Federvorrichtung
- 18: Federelement
- 20: Recline
- 22: Federeinheit
- 24: Federelement
- 26: Kraftverlauf
- 28: Flugzeugboden
- 30: Sitzboden
- 32: Federeinheit
- 34: Anlenkteil
- 36: TTL-Stellung
- 38: Richtung
- 40: Sitzrichtung
- 42: Stange
- 44: Federteller
- 46: Federteller
- 48: Federteller
- 50: Federteller
- 52: Abstützelement
- 54: Federkennlinie
- 56: Recline
- 58: Hülse
- 60: Knick

## Patentansprüche

1. Flugzeugsitzvorrichtung, insbesondere Flugzeugsitz, mit einer Aufständereinheit (10), mit einer zu der Aufständereinheit (10) verschwenkbaren Rückenlehne (12) und mit einem Verstellmechanismus (14), der eine Federvorrichtung (16) aufweist, die dazu vorgesehen ist, eine Rückstellkraft für die Rückenlehne (12) bereitzustellen, **dadurch gekennzeichnet, dass** die Federvorrichtung (16) dazu vorgesehen ist, einen Kraftverlauf (26) bereitzustellen, der mit zunehmendem Federweg eine zunehmende Steigung aufweist.

2. Flugzeugsitzvorrichtung nach Anspruch 1, **dadurch gekennzeichnet, dass** die Federvorrichtung (16) eine Federeinheit (22) mit einem Federelement (18) aufweist, das erst ab einem Recline (20) der Rückenlehne (12) größer als Null und insbesondere größer als 3° in Wirkverbindung kommt.

3. Flugzeugsitzvorrichtung nach Anspruch 2, **dadurch gekennzeichnet, dass** das Federelement (18) der Federvorrichtung (16) erst ab einem Recline (20) der Rückenlehne (12) größer als 5° in Wirkverbindung kommt.

4. Flugzeugsitzvorrichtung nach Anspruch 2 oder 3, **dadurch gekennzeichnet, dass** das Federelement (18) bei einer Auslenkung von 4 mm eine Federkraft größer als 20N erzeugt.

5. Flugzeugsitzvorrichtung nach Anspruch 4, **dadurch gekennzeichnet, dass** das Federelement (18) bei einer Auslenkung von 4 mm eine Federkraft größer als 50N erzeugt.

6. Flugzeugsitzvorrichtung nach einem der Ansprüche 2 bis 5, **dadurch gekennzeichnet, dass** die Federvorrichtung (16) zusätzlich zu der einen Federeinheit (22) zumindest eine weitere Federeinheit (32) aufweist, die insbesondere eine Gasdruckfeder umfasst.

7. Flugzeugsitzvorrichtung nach einem der vorhergehenden Ansprüche, **dadurch gekennzeichnet, dass** die Federvorrichtung (16) eine Federeinheit (22) mit einem ersten Federelement (24) und zumindest einem, zum ersten in Reihe geschalteten zweiten Federelementen (18) aufweist.

8. Flugzeugsitzvorrichtung nach einem der vorhergehenden Ansprüche, **dadurch gekennzeichnet, dass** die Rückenlehne (12) ein Gewicht größer als 10 kg aufweist.

9. Verfahren zum Betrieb einer Flugzeugsitzvorrichtung nach einem der Ansprüche 1 bis 6.

## Claims

1. Aircraft seat device, in particular aircraft seat,
with a mounting unit (10),
with a backrest (12) that is pivotable with respect to the mounting unit (10) and with an adjusting mechanism (14) comprising a spring device (16) that is configured to provide a reset force for the backrest (12),
**characterized in that** the spring device (16) is configured to provide a force profile (26) having an increasing gradient with increasing spring travel.

2. Aircraft seat device according to claim 1,
**characterized in that** the spring device (16) comprises a spring unit (22) with a spring element (18) which comes into operative connection only from a reclination (20) of the backrest (12) greater than zero and in particular greater than 3°.

3. Aircraft seat device according to claim 2,
**characterized in that** the spring element (18) of the spring device (16) comes into operative connection only from a reclination (20) of the backrest (12) greater than 5°.

4. Aircraft seat device according to claim 2 or 3,
**characterized in that** the spring element (18) generates - with a deflection of 4 mm - a spring force greater than 20 N.

5. Aircraft seat device according to claim 4,
**characterized in that** the spring element (18) generates - with a deflection of 4 mm - a spring force greater than 50 N.

6. Aircraft seat device according to one of claims 2 to 5,
**characterized in that** the spring device (16) comprises, in addition to the one spring unit (22), at least one further spring unit (32), which in particular comprises a gas compression spring.

7. Aircraft seat device according to one of the preceding claims,
**characterized in that** the spring device (16) comprises a spring unit (22) with a first spring element (24) and at least one second spring element (18), which is connected in series with the first spring element (24).

8. Aircraft seat device according to one of the preceding claims,
**characterized in that** the backrest (12) has a weight greater than 10 kg.

9. Method for operating an aircraft seat device according to one of claims 1 to 6.

## Revendications

1. Dispositif de siège d'avion, en particulier siège d'avion,
avec une unité de montage (10),
avec un dossier (12) pivotable par rapport à l'unité de montage (10) et avec un mécanisme de réglage (14) qui comprend un dispositif-ressort (16) conçu pour fournir une force de rappel pour le dossier (12),
**caractérisé en ce que** le dispositif-ressort (16) est conçu pour fournir une progression de force (26) ayant un gradient croissant lors d'une course de ressort croissante.

2. Dispositif de siège d'avion selon la revendication 1,
**caractérisé en ce que** le dispositif-ressort (16) comprend une unité de ressort (22) avec un élément de ressort (18) qui n'entre en liaison effective qu'à partir d'une reclinaison (20) du dossier (12) supérieure à zéro et en particulier supérieure à 3°.

3. Dispositif de siège d'avion selon la revendication 2,
**caractérisé en ce que** l'élément de ressort (18) du dispositif-ressort (16) n'entre en liaison effective qu'à partir d'une reclinaison (20) du dossier (12) supérieure à 5°.

4. Dispositif de siège d'avion selon la revendication 2 ou 3,
**caractérisé en ce que** l'élément de ressort (18) génère - lors d'une déflexion de 4 mm - une force de ressort supérieure à 20 N .

5. Dispositif de siège d'avion selon la revendication 4,
**caractérisé en ce que** l'élément de ressort (18) génère - lors d'une déflexion de 4 mm - une force de ressort supérieure à 50 N .

6. Dispositif de siège d'avion selon l'une des revendications 2 à 5,
**caractérisé en ce que** le dispositif-ressort (16) comprend, en plus de l'unité de ressort (22), au moins une autre unité de ressort (32) qui comprend en particulier un ressort à gaz.

7. Dispositif de siège d'avion selon l'une des revendications précédentes,
**caractérisé en ce que** le dispositif-ressort (16) comprend une unité de ressort (22) avec un premier élément de ressort (24) et au moins un deuxième élément de ressort (18) monté en série par rapport au premier élément de ressort (24).

8. Dispositif de siège d'avion selon l'une des revendications précédentes,
**caractérisé en ce que** le dossier (12) présente un poids supérieur à 10 kg.

9. Procédé de fonctionnement d'un dispositif de siège d'avion selon l'une des revendications 1 à 6.
